# EUROPÄISCHE PATENTANMELDUNG

(11) **EP 1 621 402 A1**
(43) Veröffentlichungstag der Anmeldung: **01.02.2006**
(21) Anmeldenummer: 05015945.8
(22) Anmeldetag: 22.07.2005
(51) Int. Cl.: B60Q 1/30, B60Q 1/26, B60Q 1/56

(54) **Heckleuchtenanordnung für Lastfahrzeuge, insbesondere Anhänger**

(30) Priorität: 27.07.2004 DE 102004036340
(71) Anmelder: Schmitz Gotha Fahrzeugwerke GmbH, 99867 Gotha (DE)
(72) Erfinder: Koch, Josef, 89081 Ulm (DE)
(74) Vertreter: Weber, Gerhard

(57) **Zusammenfassung**

Für eine Heckleuchtenanordnung eines Lastfahrzeugs, insbesondere eines Anhängers wird vorgeschlagen, ein Leuchtengehäuse durch ein lineares, im Querschnitt eine geschlossene Kammer aufweisendes Profil aus transparentem Kunststoff zu bilden. In der Kammer sind längsverschiebbar verschiedene elektrooptisch aktive oder passive Trägermodule einsetzbar. Die entgegen gesetzten Öffnungen der Kammer sind durch Endverschlüsse wasserdicht verschließbar.

## Beschreibung

Die Erfindung betrifft eine Heckleuchtenanordnung für Lastfahrzeuge, insbesondere Anhänger.

Heckleuchtenanordnungen für Fahrzeuge sind in großer Formenvielfalt bekannt. Während bei Personenkraftwagen in der Regel eine ästhetische Einfügung der Leuchtenanordnung in die Karosserieform wichtig ist und hierbei auch komplexe Aufbauten der Leuchtengehäuse, wie z. B. aus der DE 38 37 437 C2 bekannt sind, steht bei Lastfahrzeugen der funktionale Aspekt in der Regel stärker in Vordergrund.

Eine aus der US 3 691 366 bekannte Heckleuchtenanordnung für Anhänger enthält mehrere unterschiedliche Leuchten vormontiert auf einen gemeinsamen Träger, welcher seinerseits an einem Anhänger befestigbar ist. Diese Heckleuchtenanordnung ist für kleinere Anhänger, insbesondere an Personenkraftwagen anhängbare Anhänger vorgesehen. Größere Lastfahrzeuge, insbesondere auch größere Anhänger und Sattelauflieger weisen typischerweise am Heck eine stabile Quertraverse mit einem U-förmig nach hinten offenen Abschnitt auf, in welchem links und rechts je eine getrennte Leuchtenanordnung mit mehreren Lichtquellen unterschiedlicher Funktion befestigt ist. Die Leuchtenanordnungen bestehen in typischer Bauweise aus einem topfförmigen Gehäuse und einem unter Zwischenfügung einer Ringdichtung auf dem Gehäuse befestigbaren transparenten Deckel, welcher den unterschiedlichen Leuchten zugeordnet verschieden gefärbte Bereiche enthalten kann. Zusätzlich ist beim Kennzeichenfeld eine separate Kennzeichenbeleuchtung vorgesehen.

Der vorliegenden Erfindung liegt die Aufgabe zugrunde, eine vorteilhafte Heckleuchtenanordnung für Kraftfahrzeuge anzugeben.

Die Erfindung ist im unabhängigen Patentanspruch 1 beschrieben. Die abhängigen Ansprüche enthalten vorteilhafte Ausgestaltungen und Weiterbildungen der Erfindung.

Der Einsatz eines Profils mit einer im Querschnitt geschlossenen Kammer und einer entgegen der Fahrtrichtung nach hinten weisenden transparenten Kammerwand führt zu einem besonders flexiblen Aufbau einer Heckleuchtenanordnung, da eine große Vielfalt von im Detail unterschiedlichen Einsatzfällen mit einem oder wenigen Profilquerschnitten abgedeckt werden können. Die Profile können insbesondere in größerer Länge bevorratet und im Einzelfall in der benötigten Länge abgetrennt werden. Die Kammer kann durch Endverschlüsse in den Öffnungen an den in Längsrichtung des Profils entgegengesetzten Enden einfach und zuverlässig wasserdicht abgeschlossen werden.

Eine Lichtquellenanordnung ist in ein derartiges Profil eingesetzt und kann ein oder mehrere Trägermodule mit a priori beliebiger Beleuchtungsfunktion enthalten. Die Trägermodule können durch eine Öffnung der Kammer in Längsrichtung eingeschoben werden und sind vorteilhafterweise in Längsrichtung des Profils verschiebbar und aus der Kammer in Längsrichtung wieder entnehmbar. Der Profilquerschnitt ist vorteilhafterweise auf die Form der Trägermodule in der Weise abgestimmt, dass die Trägermodule in der Kammer in bezüglich des Profilquerschnitts eindeutiger und definierter Position gehalten sind, insbesondere nicht bezüglich der Profillängsachse verdrehbar sind und quer zur Profillängsachse unverschiebbar gehalten sind. Der Profilquerschnitt kann hierfür vorteilhafterweise gesonderte Führungsstrukturen für die längsverschiebbare Aufnahme der Trägermodule aufweisen.

Die Trägermodule enthalten vorteilhafterweise ebene Platinen als Leuchtmittelträger. Die Platinen weisen vorteilhafterweise zumindest an abschnittsweise parallelen Oberkanten und Unterkanten Haltestrukturen auf, welche in Führungsnuten des Profilquerschnitts einliegen. Die Haltestrukturen können insbesondere auch durch Oberkanten und Unterkanten der Leuchtmittelträger selbst gebildet sein. Die Leuchtmittel sind bevorzugt lichtemittierende Halbleiterbauelemente, insbesondere Dioden.

Der wasserdichte Abschluss der Kammer durch Endverschlüsse in den Öffnungen kann in einer ersten einfachen Ausführung durch Verguss der Öffnungen mit einem plastischen, sich verfestigenden Dichtmaterial erfolgen, wobei der Verguss zugleich eine mehradrige Leitungsdurchführung, insbesondere auch ein Kabel, einschließen kann. In bevorzugter Ausführungsform sind spezielle Verschlusskörper vorgesehen, welche vorteilhafterweise mehradrige elektrische Durchführungen zur Ansteuerung der Lichtquellen der gegebenenfalls mehreren Trägermodule enthalten können, beispielsweise als mehradrige Kontaktanordnungen und/oder abgedichtete Kabeldurchführungen. Durch den Aufbau des Gehäuses aus einem Profil können vorteilhafterweise die Verschlusskörper für alle Leuchtenanordnungen mit gleichem Profilquerschnitt unabhängig von der Längserstreckung des Gehäuses und der enthaltenen Trägermodule identisch sein. Die kumulierte Länge der abzudichtenden Ränder ist typischerweise wesentlich geringer als bei herkömmlichen Heckleuchtenanordnungen mit mehreren Topfgehäusen.

Durch Verwendung von nur einem oder wenigen Profilquerschnitten kann mit geringer Teilevielfalt der Komponenten eine große Vielfalt unterschiedlicher Leuchtenanordnungen zusammengestellt werden.

Mehrere Trägermodule sind vorteilhafterweise innerhalb einer gemeinsamen Kammer in unterschiedlicher Folge in Profillängsrichtung gruppierbar. Eine elektrische Versorgung mehrerer Trägermodule innerhalb einer gemeinsamen Kammer kann gemäß einer ersten vorteilhaften Ausführung durch eine sich in Profillängsrichtung erstreckende mehradrige Leitungsanordnung erfolgen, an welche die einzelnen Trägermodule an beliebiger Stelle im Längsverlauf anschließbar sind. Bei bevorzugter Ausführung der Leiteranordnung als Flachkabel weisen die Trägermodule hierfür vorteilhafterweise jeweils wenigstens eine Kontaktgruppe mit Schneidkontakten oder dergleichen zum Anschluss an das mehradrige Kabel unter Durchdringung der Kabelisolierung auf. Das Kabel kann auch als Folienkabel ausgeführt sein. Das Kabel umfasst vorteilhafterweise so viele Adern, wie im äußersten Falle zur Ansteuerung und Versorgung der gesamten Heckleuchtenanordnung erforderlich sind. Die Kontaktgruppen der einzelnen Trägermodule brauchen dann aber nur die Adern kontaktieren, welche für die jeweilige Beleuchtungsfunktion erforderlich sind. Es können aber mit einheitlichen Kontaktvorrichtungen alle Kabeladern kontaktiert sein, wobei auf dem Trägermodul dann aber nur die benötigten Kontakte elektrisch angeschlossen sind.

Ein Kabel als mehradrige Leiteranordnung innerhalb eines Profils in dessen Längsrichtung kann auch in einer zusätzlichen Schiene, z B. aus Aluminium, geführt sein und dabei auch als mechanischer Träger zur mechanischen Längsverbindung der Trägermodule dienen. Die mehradrige Leiteranordnung kann auch als im wesentlichen starre Schiene mit mehreren Leiterspuren ausgeführt sein, an deren Leiterspuren die einzelnen Trägermodule durch Gruppen von Steckkontakten, Clipskontakten, Federkontakten etc. anschließbar sind.

Ein sich in Profillängsrichtung erstreckender formstabiler Streifen kann auch als mechanischer Träger für die Module mit oder ohne elektrische Verbindungsfunktion dienen, wobei die Module in einem solchen Fall nicht notwendig selbst in den Führungsstrukturen geführt sein müssen. Die Führung kann auch durch Eingreifen des Streifens selbst in die Führungsstrukturen des Profils erfolgen. Ein derartiger Streifen kann auch in Ausführung aus gut wärmeleitendem Material zur Wärmeabfuhr oder Verteilung innerhalb des Leuchtergehäuses dienen.

In anderer vorteilhafter Ausführungsform enthalten die Trägermodule an einander zuweisenden vertikalen Kanten Steckkontaktgruppen als Teile von aus komplementären Steckkontaktgruppen aufgebauten Steckkupplungen. Vorzugsweise weisen die Trägermodule an ihren in Längsrichtung entgegen gesetzten vertikalen Kanten je eine von zwei komplementären Steckkontaktanordnungen auf, deren entsprechende Kontakte paarweise miteinander verbunden sind. Von einer Einspeiseseite der Leuchtenanordnung beabstandete und durch andere Trägermodule getrennte Trägermodule werden dann über die Steckverbindungen und die Kontakt-Druckverbindungen dieser anderen Trägermodule angesteuert. Die Steckverbindungen und die paarweisen Verbindungen von Steckkontakten innerhalb eines Trägermodules bilden damit wieder eine mehradrige Leiteranordnung. Dabei weisen die Trägermodule mit entgegen gesetzt komplementären Steckkontaktgruppen vorteilhafterweise in den Steckkontaktgruppen jeweils eine vollständige Steckkontaktgruppe mit Steckkontakten zu allen im äußersten Fall benötigten Beleuchtungsfunktionen der Heckleuchtenanordnung auf, auch wenn das jeweilige Trägermodul für die eigene Beleuchtungsfunktion nur eine demgegenüber eingeschränkte Anzahl von Kontakten ausnutzt.

Die elektrische Verbindung der Trägermodule bzw. der gegebenenfalls vorliegenden mehradrigen Leiteranordnung mit außerhalb des Gehäuses liegenden elektrischen Signalquellen zur Versorgung und selektiven Ansteuerung der einzelnen Trägermodule mit Beleuchtungsfunktion erfolgt vorzugsweise durch wenigstens einen der Endverschlüsse hindurch. Es kann auch, vorzugsweise bei längeren, insbesondere bei über im wesentlichen die gesamte Fahrzeugbreite einstückig durchgehenden Profilgehäuse auch vorgesehen sein, elektrische Verbindungen durch beide Endverschlüsse hindurch zu führen. Solche elektrischen Verbindungen können z. B. in einen isolierenden Verschlusskörper eingegossene Druckkontaktierungen sein. In bevorzugter Ausführung sind die elektrischen Verbindungen durch die Adern eines mehradrigen Kabels gebildet, welches durch einen Endverschluss durchgeführt und z. B. durch Vergießen oder mittels einer formangepassten Dichtung einer Kabeldurchführung in einem Verschlusskörper abgedichtet ist. Ein solches Kabel kann außerhalb des Leuchtengehäuses vorteilhafterweise einen Anschlussabschnitt zum Anschluss an ein Hauptkabel oder einen Verteiler bilden oder auch als direktes Verbindungskabel zu einer frontseitigen Steuereinrichtung eines Anhängers bilden. Innerhalb des Leuchtengehäuses kann ein durch einen Endverschluss durchgeführtes Kabel z. B. mit einer mehrpoligen Kontaktvorrichtung oder direkt mit einem dem Endverschluss nächsten Trägermodul verbunden, insbesondere auch verlötet sein. In anderer Ausführung kann das durch den Endverschluss hindurch geführte Kabel auch ununterbrochen als die genannte mehradrige Leiteranordnung innerhalb des Profilgehäuses in dessen Längsrichtung weitergeführt sein. Bei beidseitigem Kabelanschluss an ein Gehäuse kann auch eine mehradrige Leiteranordnung durchgehend ausgeführt und mit beiden Anschlusskabeln verbunden sein.

Neben den Trägermodulen mit Beleuchtungsfunktion können in demselben Gehäuse einer Leuchtenanordnung auch noch andere Funktionsmodule, beispielsweise mit optischen Sensoren, oder auch passive Module vorgesehen sein. Passive Module können z. B. als Informationsträger mit bedruckter Oberfläche oder als Reflektorflächen ausgebildet sein. Auch solche passiven Module können mit Steckkontaktgruppen versehen sein und Abschnitte einer in Längsrichtung verlaufenden mehradrigen Leiteranordnung sein.

Vorteilhafterweise ist ein Trägermodul mit überwiegend quer zur Fahrtrichtung strahlender Lichtquelle als Kennzeichenbeleuchtungsmodul vorhanden.

Zur Kennzeichenbeleuchtung kann in vorteilhafter Ausführung vorgesehen sein, ein Kennzeichenbeleuchtungsmodul vertikal oberhalb des Kennzeichenfelds in dem Profilgehäuse anzuordnen und das Kennzeichenbeleuchtungsmodul mit nach unten abstrahlenden Leuchtmitteln zu versehen, welche durch die unten liegende Kammerwand in Richtung des Kennzeichens strahlen. Bei typischerweise vertikaler Trägermodulebene der Trägermodule in der Kammer verläuft die Abstrahlrichtung dann im wesentlichen vertikal parallel zur Trägermodulebene, wogegen bei den übrigen Beleuchtungsfunktionen die mittlere HauptAbstrahlrichtung der Lichtquellen im wesentlichen entgegen der Fahrtrichtung in Richtung der Flächennormalen verläuft. Für einzelne Module, z. B. ein Rückfahrscheinwerfermodul kann die Hauptstrahlrichtung auch gezielt anders ausgerichtet, z. B. gegen die Horizontale nach unten geneigt sein.

Das das Gehäuse der Leuchtenanordnung bildende Profil weist vorteilhafterweise nach außen weisend, insbesondere in Fahrtrichtung liegend, im Querschnitt hinterschnittene Befestigungsstrukturen auf. In solche hinterschnittenen Befestigungsstrukturen des Profilquerschnitts können vorteilhafterweise Gegenstrukturen eines Trägers des Fahrzeugs, z. B. einer Quertraverse, oder Befestigungselemente, z. B. Schraubenköpfe, Nutensteine etc. in Längsrichtung des Profils veränderlich positionierbar eingreifen.

Der Profilquerschnitt kann vorteilhafterweise in vertikaler Richtung einen lichten Durchmesser der Kammer aufweisen, welcher wenigstens das 1,5-fache, insbesondere wenigstens das 2-fache des lichten Durchmessers in horizontaler Fahrtrichtung beträgt. Die entgegen der Fahrtrichtung nach hinten weisende Kammerwand kann gewölbt sein, wobei der mittlere Wölbungsradius vorteilhafterweise wenigstens das 2-fache des vertikalen Kammerdurchmessers beträgt.

Das Profil weist für die vertikale Kennzeichenanstrahlung auch nach unten eine transparente Kammerwand auf. Vorzugsweise ist das Profil materialhomogen aus transparentem Kunststoff. Das Kunststoffmaterial des Profils ist vorteilhafterweise im wesentlichen formstabil und für den Einsatz als Leuchtengehäuse als starr anzusehen. Als Kunststoff kann beispielsweise vorteilhaft Polycarbonat Verwendung finden.

In einer ersten vorteilhaften Ausführung ist das Gehäuse einer Heckleuchtenanordnung über wenigstens 80 %, insbesondere wenigstens 90 % der Fahrzeugbreite einstückig durchgehend ausgeführt. Das Gehäuse enthält dabei vorteilhafterweise in einer einzigen gemeinsamen Kammer wenigstens linksseitig und rechtsseitig jeweils Trägermodule mit Lichtquellen für die Funktionen Rücklicht, Bremslicht und Blinker. Vorteilhafterweise sind in der gemeinsamen Kammer auch noch wenigstens ein oder mehrere Trägermodule mit Lichtquellen zu wenigstens einer, vorzugsweise allen der Funktionen Nebelschlussleuchte, Rückfahrscheinwerfer, Kennzeichenbeleuchtung und dritter mittiger Brems- oder Warnleuchte vorgesehen. Die durchgehende Heckleuchtenanordnung kann von einer oder vorzugsweise von beiden seitlichen Profilenden elektrisch angeschlossen sein.

In anderer Ausführung enthält die Heckleuchtenanordnung wenigstens zwei getrennte, gegen die Fahrzeugmitte versetzt, insbesondere im wesentlichen symmetrisch zur Fahrzeugmitte angeordnete Leuchtenanordnungen, welche vorteilhafterweise nahe bei den seitlichen Fahrzeugrändern liegen und auch bei den hinteren Radabdeckungen angeordnet sein können. Die beiden Leuchtenanordnungen enthalten dann in an sich gebräuchlicher Weise jeweils Rücklichter, Bremslichter und einen Blinker, sowie vorteilhafterweise noch wenigstens ein Trägermodul aus den Funktionen Rückfahrscheinwerfer und Nebelschlussleuchte. Je nach Anordnung des Kennzeichenfeldes kann ein Kennzeichenleuchtenmodul in eine der beiden Leuchtenanordnungen integriert oder eine weitere gesonderte Leuchtenanordnung zur Kennzeichenbeleuchtung vorgesehen sein.

In eine in der Fahrzeugmitte angeordnete Kennzeichenbeleuchtung können vorteilhafterweise in demselben Trägermodul eine Warnblinkleuchte und/oder eine dritte Bremsleuchte integriert sein. Es kann auch vorgesehen sein, das Kennzeichen gegebenenfalls auf einem eigenen Trägermodul oder auf dem Trägermodul für die Kennzeichenbeleuchtung in dem Gehäuse einer Leuchtenanordnung anzuordnen.

Innerhalb einer Heckleuchtenanordnung können Profile mit Kammern mit unterschiedlichen Querschnitten, insbesondere unterschiedlichen Höhen vorgesehen sein. Die unterschiedlichen Kammern können in getrennten Profilen oder vertikal übereinander in einem gemeinsamen Profil ausgebildet sein. Bei getrennten Profilen kann vorgesehen sein, diese miteinander zu verbinden. Es können auch getrennte Profile mit gleichem Querschnitt vertikal übereinander angeordnet und dabei auch untereinander verbunden sein.

Es kann, insbesondere bei mehreren unterschiedlichen Profilen innerhalb der Heckleuchtenanordnung, auch vorgesehen sein, eines oder mehrere der Profile nur mit passiven Modulen auszustatten. Diese Profile benötigen dann auch keinen elektrischen Anschluss. Passive Module können insbesondere bedruckbare Informationsträger und/oder Reflektormodule sein. Insbesondere bei zwei vertikal übereinander angeordneten getrennten Kammern innerhalb eines gemeinsamen Profils kann vorteilhafterweise vorgesehen sein, dass nur in einer der Kammer elektrooptisch aktive Trägermodule und in der anderen Kammer nur passive Trägermodule angeordnet sind.

Verschlusskörper zum wasserdichten Verschließen der Kammeröffnungen an den Enden der Profile können vorteilhafterweise in mehrteiliger Ausführung einen gegen die Kammerwand verspannbaren Formkörper aus elastischem, insbesondere gummielastischem Dichtungsmaterial enthalten. Vorteilhafterweise ist der verspannbare Formkörper in Profillängsrichtung zwischen zwei im wesentlichen formstabilen Körpern, z. B. als Grundkörper und als Druckkörper bezeichnet, eingefügt, welche in Längsrichtung gegeneinander verspannbar sind, beispielsweise durch Schrauben. Der elastische Dichtungs-Formkörper weist vorteilhafterweise bezüglich der Profillängsrichtung konisch verlaufende Anlageflächen auf, welche mit gleichfalls konischen Gegenflächen von Grundkörper und/oder Druckkörper in Berührung stehen und eine relative Längsverschiebung von Grundkörper und/oder Druckkörper relativ zum elastischen Formkörper in eine Querbewegung des Formkörpers und eine Quer-Verspannung und Abdichtung gegen die Innenwand der Kammer umsetzen.

In anderer Ausführung kann ein Verschlusskörper in die Öffnung eines Profils eingeklebt sein. Die Verschlusskörper können abdichtbare Durchführungen für Kabel aufweisen.

Die Erfindung ist nachfolgend anhand bevorzugter Ausführungsbeispiele unter Bezugnahme auf die Abbildungen noch eingehend veranschaulicht. Dabei zeigt:
- Fig. 1: einen ersten Profilabschnitt,
- Fig. 2: einen zweiten Profilabschnitt,
- Fig. 3: einen Querschnitt eines Zweikammer-Profils,
- Fig. 4: ein Profil nach Fig. 1 mit Trägermodulen,
- Fig. 5: ein schräg aufgeschnittenes Gehäuse nach Fig. 4,
- Fig. 6: ein teilweise aufgeschnittenes Zweikammer-Profil,
- Fig. 7: ein teilweise aufgeschnittenes Profil mit Endverschluss,
- Fig. 8: zwei Trägermodule,
- Fig. 9: eine Heckleuchtenanordnung mit drei Gehäuse gleichen Querschnitts,
- Fig. 10: eine Heckleuchtenanordnung mit einem durchgehenden Gehäuse,
- Fig. 11: eine Heckleuchtenanordnung mit drei Gehäusen verschiedenen Querschnitts,
- Fig. 12: eine Heckleuchtenanordnung mit einem Zweikammer-Profil,
- Fig. 13: eine Heckleuchtenanordnung mit zusätzlichen Reflektoren,
- Fig. 14: eine Heckleuchtenanordnung für einen Muldenkipper,
- Fig. 15: eine erste Leitungsführung innerhalb einer Leuchtenanordnung,
- Fig. 16: eine weitere Leitungsführung innerhalb einer Leuchtenanordnung.

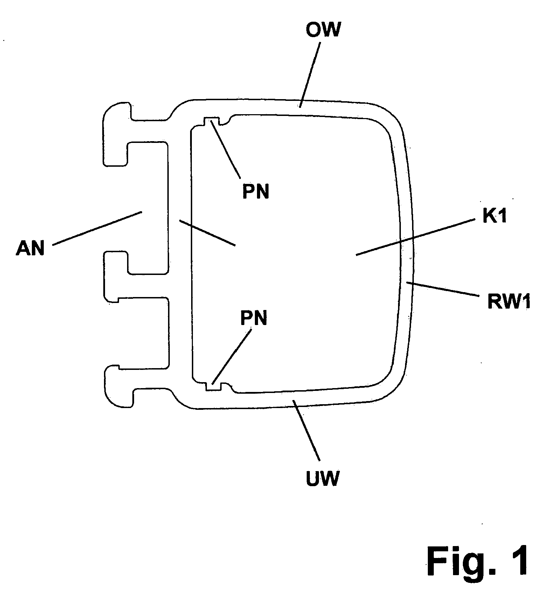

Bei dem in Fig. 1 skizzierten Profilquerschnitt ist eine erste Kammer K1 allseitig von Profilwänden RW1, VW, UW und OW umschlossen. Das Profil erstreckt sich mit gleichbleibendem Querschnitt senkrecht zur Zeichenebene und kann durch Extrusion aus Kunststoff kostengünstig hergestellt und einfach auf die im Einzelfall benötigte Länge abgetrennt werden. Zumindest die entgegen der im eingezeichneten Koordinatensystem in x-Richtung weisenden Fahrtrichtung entgegen gesetzte, nach hinten weisende Rückwand RW1 ist transparent. Vorzugsweise ist das gesamte Profil materialhomogen einstückig aus transparentem Kunststoff, beispielsweise Polycarbonat, hergestellt. Das Kunststoffmaterial ist vorzugsweise farblos transparent. Die nach hinten weisende Kammerwand RW1 des Profils kann gewölbt verlaufen, wobei der mittlere Wölbungsradius vorzugsweise größer ist als das 1,5-fache, vorzugsweise größer als das 2-fache des lichten Durchmessers der Kammer K1 in z-Richtung.

An der in Fahrtrichtung weisenden vorderen Kammerwand VW bezüglich der Kammer nach außen, d. h. in Fahrtrichtung ragend, sind an dem Profil Befestigungsstrukturen, beispielsweise wie skizziert in Form einer senkrecht zur Zeichenebene verlaufenden T-förmig hinterschnittenen, in Fahrtrichtung offenen Nut ausgebildet, mittels welcher das Profil an Halterungen, beispielsweise einer Quertraverse eines Anhängers befestigt werden kann. In eine solche T-Nut können beispielsweise längsverschiebbar Kulissensteine mit in Fahrtrichtung ragenden Befestigungselementen oder Gewindebohrungen oder auch Schraubenköpfe einliegen. An dem fahrzeugseitigen Träger können dann entsprechende Öffnungen vorliegen, durch welche Schraubenschäfte oder Gewindebolzen hindurch reichen und zur Verschraubung des Profils an dem Träger dienen.

In der Kammer zeigt der skizzierte Querschnitt Führungsstrukturen zur längsverschiebbaren Halterung von Trägermodulen. Die Führungsstrukturen sind im skizzierten vorteilhaften Beispiel als Längsnuten PN im Bereich der oberen Kammerwand OW und der unteren Kammerwand UW ausgebildet. An Trägermodulen sind in entsprechender Weise dann an oberen und unteren Kanten Führungselemente vorgesehen, welche in die Führungsnuten einliegen und ein Trägermodul in in der Zeichenebene definierter Position und insbesondere auch unverdrehbar um die Längsachse des Profils halten, wogegen prinzipiell eine Verschiebung in Längsrichtung des Profils, d. h. senkrecht zur Zeichenebene gegeben ist, wodurch solche Trägermodule auf einfache Weise in ein langgestrecktes Profil eingeführt bzw. aus diesem entnommen werden können. Das Profil kann auch mehrere verschiedene und/oder verschieden angeordnete Führungsstrukturen für unterschiedliche Trägermodule und/oder für verschiedene Positionen von Trägermodulen aufweisen.

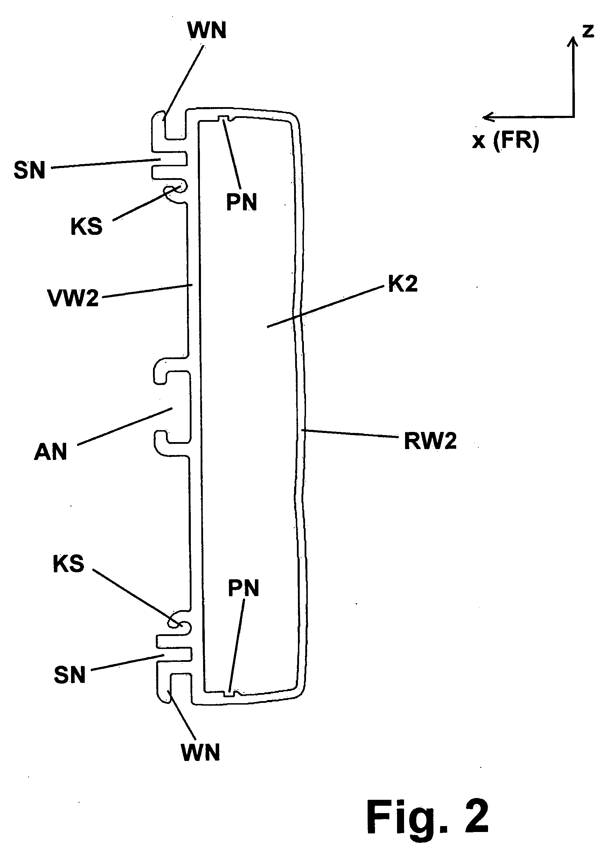

Die Fig. 2 zeigt einen Querschnitt eines prinzipiell ähnlich zu Fig. 1 aufgebauten Profils, welches aber in vertikaler z-Richtung eine wesentlich größere Höhe aufweist. In entsprechender Weise sind bei einem solchen Profil die einsetzbaren Module mit größerer Höhe ausgebildet. In Übereinstimmung mit Fig. 1 zeigt das Profil nach Fig. 2 wiederum die Führungsstrukturen PN an der oberen Kammerwand und der unteren Kammerwand sowie eine Befestigungsstruktur an der in Fahrtrichtung vorne liegenden Kammerwand VW2 in Form einer in Fahrtrichtung offenen, T-förmig hinterschnittenen Nut. Bei dem in Fig. 2 skizzierten Beispiel sind an der nach vorne weisenden Kammerwand zusätzlich beispielhaft weitere Befestigungsstrukturen ausgebildet, wobei Winkelfortsätze WN nach oben bzw. unten offene Längsnuten bilden, in welche Gegenstrukturen an einem Träger des Fahrzeugs eingreifen können. Solche Gegenstrukturen können beispielsweise abgewinkelte Blechabschnitte sein. Längsnuten SN können aus der Fahrtrichtung her durch einen fahrzeugseitigen Träger durchreichende Befestigungsschrauben aufnehmen. Teilweise offene Kanäle KS können vorgesehen sein, um die endseitigen entgegen gesetzten Öffnungen des Profils mit Verschlusskappen zu versehen und diese Verschlusskappen durch in die Kanäle KS eingreifende Schrauben zu befestigen. Die entgegen der Fahrtrichtung FR nach hinten weisende Kammerwand kann wieder gewölbt sein, wobei im skizzierten Beispiel eine mehrfach abwechselnde Wölbung vorgesehen ist.

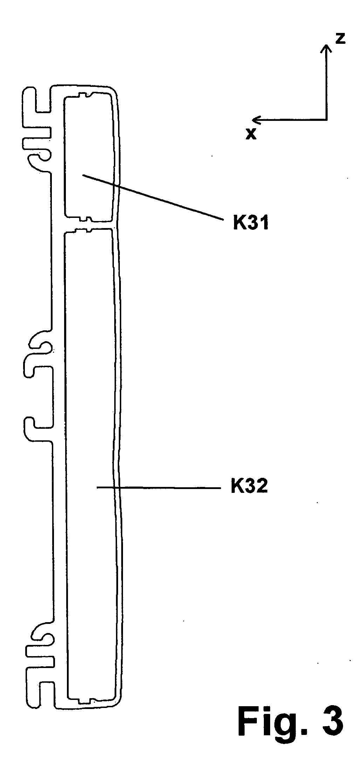

In Fig. 3 ist ein weiteres Profil im Querschnitt dargestellt, wobei in diesem Fall das Profil zwei getrennte Kammern K31 und K32 umschließt, welche in ihrer Erstreckung in z-Richtung im wesentlichen den Kammern K2 nach Fig. 2 und K1 nach Fig. 1 entsprechen, so dass in K1 bzw. K2 einsetzbare Module der Heckleuchtenanordnung auch in dem Zweikammer-Profil nach Fig. 3 eingesetzt werden können. Die in Fahrtrichtung weisenden Befestigungsstrukturen des Profils nach Fig. 3 sind im wesentlichen gleich den Strukturen des Profils nach Fig. 2.

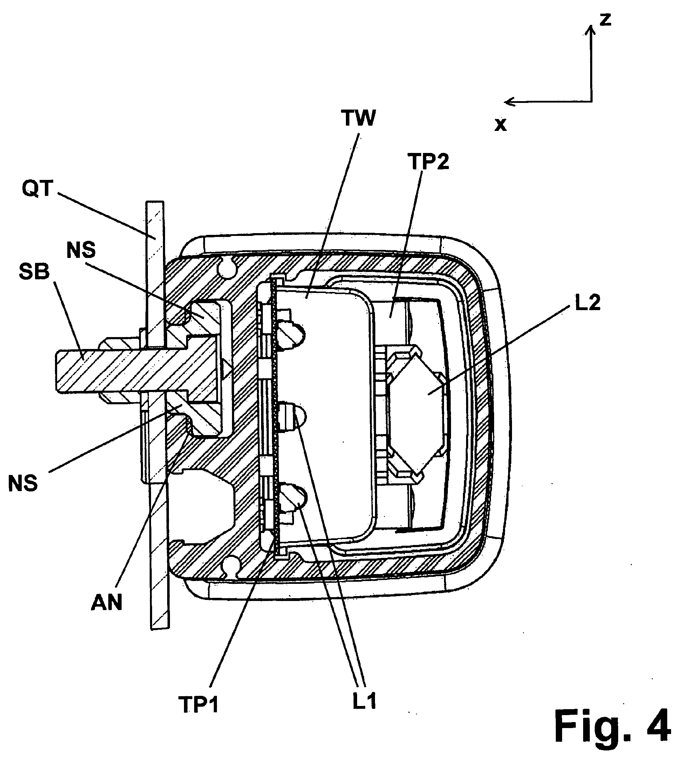

In Fig. 4 ist ein Leuchtengehäuse mit einem Profil nach Fig. 1 skizziert, in welches eine erste Trägerplatine TP1 mit lichtemittierenden Dioden als Leuchtmitteln L1 eingesetzt ist. Die Trägerplatine TP1 ist in den Führungsnuten PN gehalten, aber in Längsrichtung des Profils, d. h. senkrecht zur Zeichenebene verschiebbar. Die Hauptabstrahlrichtung der Leuchtmittel L1 sei entgegen der Fahrtrichtung FR nach hinten. Auf die Trägerplatine TP1 aufgeklippst ist eine Trennwand TW, welche benachbarte Leuchtfelder mit unterschiedlichen Beleuchtungsfunktionen gegeneinander abgrenzt. Im gegebenen Fall ist, teilweise durch die Trennwand TW verdeckt, ein weiteres, nicht ebenes Trägermodul TP2 mit Leuchtmitteln L2 dargestellt. Auch dieses weitere Trägermodul TP2 greift mit Führungselementen in die Führungsnuten PN ein und ist in diesen gehalten und senkrecht zur Zeichenebene längsverschiebbar. Die Querabmessung der Profilkammer K1 und die maximale Ausdehnung von Trägermodulen in x-Richtung sind aufeinander abgestimmt. Bei bevorzugten Trägermodulen mit auf einer ebenen Trägerplatine montierten Leuchtdioden als Leuchtmitteln WL1 auf TP1 kann das Profil auch mit geringeren Querabmessungen in x-Richtung ausgeführt sein.

In Fig. 4 ist auch noch für die Befestigung an einem Träger, beispielsweise einem Blech einer Quertraverse QT des Fahrzeugs ein in der T-Nut AN einliegender, in Längsrichtung, d. h. senkrecht zur Zeichenebene verschiebbarer Nutenstein NS mit einem Schraubbolzen SB skizziert.

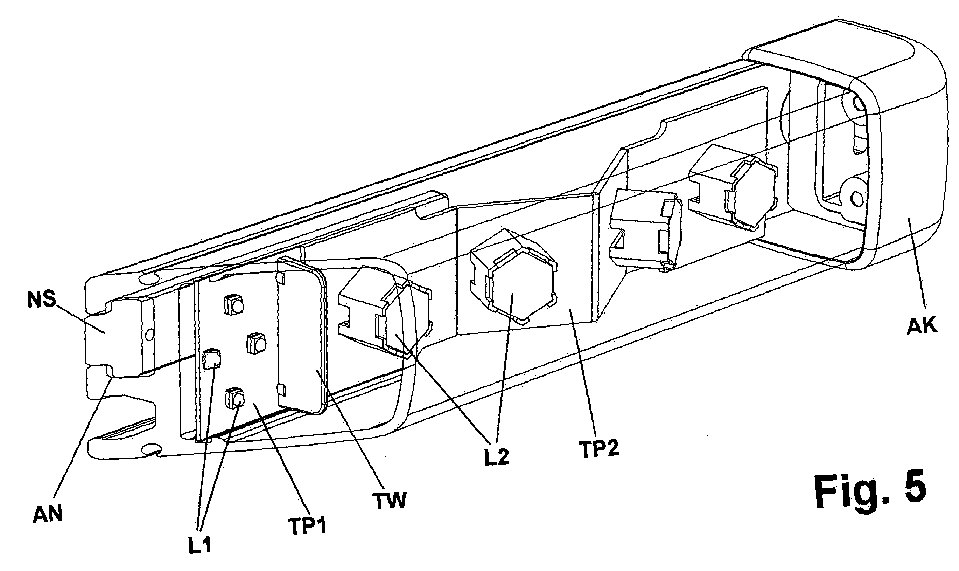

Ein aus einem Profil mit im Querschnitt geschlossener Kammer aufgebautes Leuchtengehäuse kann auf einfache und zuverlässige Weise durch Endverschlüsse in den in Längsrichtung entgegen gesetzten Öffnungen des Profils wasserdicht abgeschlossen werden. In Fig. 5 ist eine Leuchtenanordnung der in Fig. 4 skizzierten Art in Schrägansicht und mit schräg aufgeschnittenem Profil skizziert, welches auf der rechten Seite durch eine Abschlusskappe AK abgedichtet ist. Die Abschlusskappe AK als Endverschluss kann auf verschiedene Weise auf dem Profil befestigt sein und die Endöffnung abdichten.

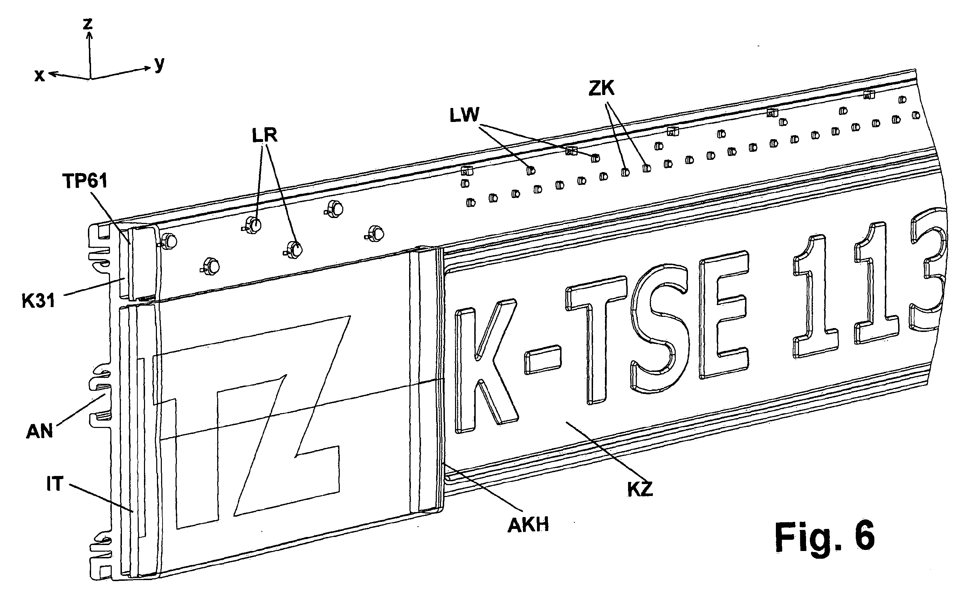

In Fig. 6 ist ein Schrägschnitt durch eine Leuchtenanordnung mit einem Zweikammer-Profil nach Fig. 3 skizziert. Hierbei sind in der oberen Kammer K31 verschiedene Leuchtmittel auf einer oder mehreren Trägerplatinen angeordnet. In der vertikal darunter liegenden Kammer K32 ist ein optisch passiver Informationsträger IT in Form eines flachen Trägers eingeschoben, welcher gleichfalls in den Führungsnuten dieser Kammer geführt ist. Das Profil ist in ProfilLängsrichtung y im Bereich der oberen Kammer durchgehend ausgeführt, im Bereich der unteren Kammer zur Bildung eines Kennzeichenfeldes für ein KFZ-Kennzeichen KZ unterbrochen, beispielsweise ausgesägt oder ausgefräst. Die dem Kennzeichen zugewandte Öffnung der unteren Kammer ist durch eine Abschlusskappe AKH verschlossen. In y-Richtung auf das Kennzeichenfeld folgend schließt sich wieder ein Abschnitt der unteren Profilkammer an.

In dem oberen durchgehenden Profilteil mit der Kammer K31 sind vorteilhafterweise oberhalb des Kennzeichenfeldes eine Reihe von Leuchtdioden als Leuchtmittel ZK angeordnet, welche überwiegend parallel zur Trägerebene der Trägerplatine TP61 nach unten durch die untere Kammerwand der Kammer K31 hindurch zum Kennzeichen hin abstrahlen und die Kennzeichenbeleuchtung bilden. Im in y-Richtung selben Platinenabschnitt können weitere Leuchtmittel LW mit anderer Beleuchtungsfunktion, beispielsweise für eine fahrzeugmittige Warnleuchte als dritte Bremsleuchte und/oder als zusätzliche Warnblinkleuchte vorgesehen sein. Seitlich benachbart zu diesem Platinenabschnitt mit den zwei Beleuchtungsfunktionen sind weitere Leuchtmittel LR, beispielsweise Dioden für die Rückfahrscheinwerferfunktion angeordnet. Die Leuchtmittel LR können derselben Platine TP61 wie die Leuchtmittel LW und ZK angeordnet und unabhängig von den anderen Leuchtmitteln ansteuerbar sein. Die in y-Richtung in verschiedenen Abschnitten befindlichen Leuchtmittel können aber auch auf einzelnen separaten Platinen angeordnet sein.

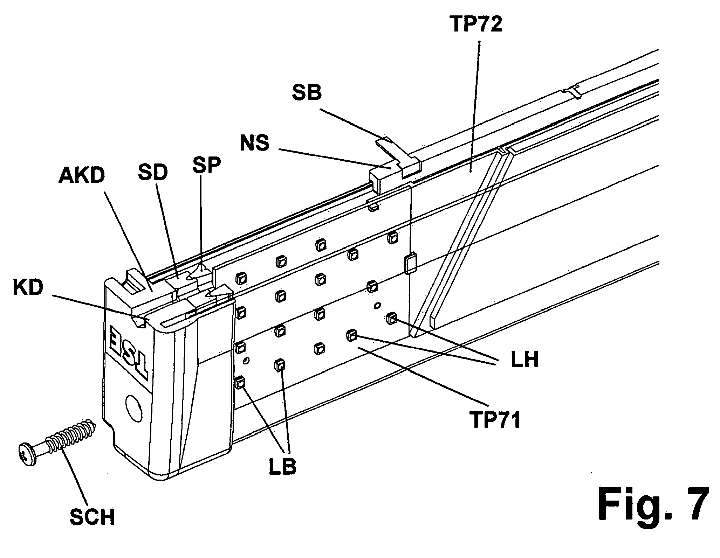

In Fig. 7 ist aufgeschnitten ein Profil der in Fig. 2 skizzierten Art dargestellt, in welches eine erste Trägerplatine TP71 mit Leuchtmitteln LB und LH und eine weitere Trägerplatte TP72, welche lediglich einen passiven Rückstrahler RS trägt, eingesetzt sind. In y-Richtung können weitere Trägerplatten folgen. In der gleichfalls aufgeschnitten gezeichneten T-Nut AN ist ein längsverschiebbarer Nutenstein NS mit einem Schraubbolzen SB dargestellt. Die in der Figur linke endseitige Öffnung des Profils ist durch einen mehrteiligen Endverschluss wasserdicht abgeschlossen. Der Endverschluss umfasst im skizzierten vorteilhaften Beispiel eine im wesentlichen formstabile Abschlusskappe AKD, eine im wesentlichen gleichfalls formstabile Spannplatte SP und eine zwischen Abschlusskappe AKD und Spannplatte SP eingefügte Spanndichtung SD aus elastisch flexiblem Material, welches insbesondere gummielastische Eigenschaften haben kann. Spanndichtung SD und Spannplatte SP zeigen jeweils einander zuweisend eine Reliefstruktur mit gegen die Längsrichtung y geneigten Flankenflächen. Die Spannplatte SP ist mittels Schrauben SCH gegen die Abschlusskappe AKD in y-Richtung verspannbar, wobei sich die Spanndichtung SD an der Abschlusskappe AKD abstützt und durch Aneinandergleiten der geneigten Flächen der Spanndichtung SD und der Spannplatte SP seitlich verformt wird. Die Spanndichtung SD legt sich dabei zum einen an die Innenwandfläche der Profilkammer und zum anderen an ein durch eine Kabelführung KD durchgeführtes Verbindungskabel (nicht mit eingezeichnet) an und dichtet dadurch die Kammer zuverlässig ab. Typischerweise reicht die Klemmkraft der Spanndichtung SD auch, um den Endverschluss zuverlässig auf dem Profilende zu halten. Ansonsten kann die Abschlusskappe noch durch in die zu Fig. 2 geschilderten Schraubkanäle KS gesichert werden. Der skizzierte Endverschluss kann vorteilhafterweise zerstörungsfrei gelöst werden, z. B. um einzelne Trägermodule auszutauschen.

Abschlusskappen ohne Kabeldurchführung können demgegenüber einfacher gestaltet sein.

Auf der Trägerplatte TP71 sind eine Mehrzahl von Leuchtdioden als Leuchtmittel montiert, welche unterschiedlichen Beleuchtungsfunktionen zugewiesen sind. Vorteilhafterweise sind die in einem auf den Endverschluss in y-Richtung folgenden ersten Abschnitt angeordneten Leuchtmittel LB als Blinkleuchten betrieben und die in dem folgenden Abschnitt angeordneten Dioden LH übernehmen vorteilhafterweise sowohl die Rücklichtfunktion als auch die Bremslichtfunktion, indem sie für die Rücklichtfunktion mit einem niedrigeren und für die Bremslichtfunktion mit einem höheren Strom betrieben werden. Die Ansteuerung erfolgt vorzugsweise über zwei unabhängige getrennte Leitungen.

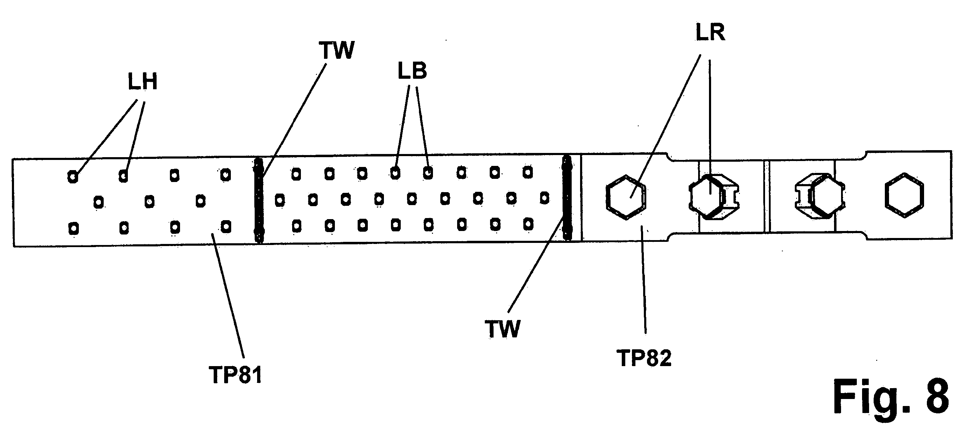

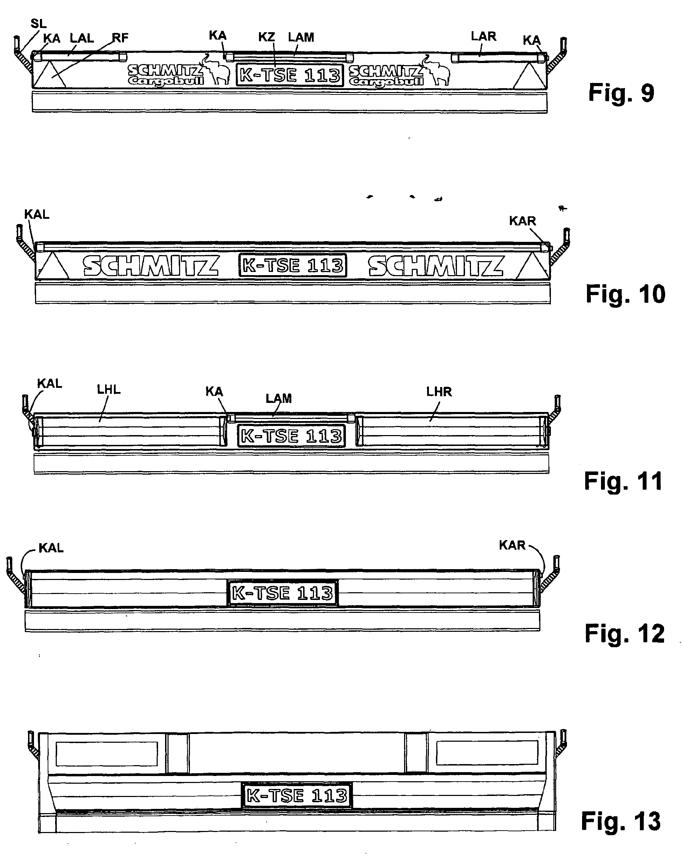

In Fig. 8 ist ein weiteres Beispiel einer Leuchtmittelanordnung in linearer Anordnung mehrerer Abschnitte innerhalb einer (nicht mit dargestellten) Profilkammer skizziert mit einem linken ersten Abschnitt mit Leuchtdioden LH für Rücklicht und Bremslicht, auf derselben Trägerplatine TP81 durch eine Trennwand TW abgeteilt Leuchtmitteln LB für die Blinklichtfunktion und auf einer weiteren Trägerplatine Leuchtmittel LR für die Rückfahrscheinwerferfunktion. In Fig. 9 bis Fig. 13 sind verschiedene vorteilhafte Heckleuchtenanordnungen mit Gehäusen aus Hohlkammerprofilen in Heckansicht auf das Fahrzeug dargestellt.

In Fig. 9 ist die Leuchtenanordnung dreiteilig mit einer linken Leuchtenanordnung LAL, einer mittleren Leuchtenanordnung LAM und einer rechten Leuchtenanordnung LAR in jeweils eigenen Profilgehäusen, welche auch für sich an beiden Enden abgedichtet und jeweils separat elektrisch angeschlossen sind. Beispielsweise kann die linke Leuchtenanordnung LAL Lichtmittel für die Beleuchtungsfunktionen linker Blinker, Rücklicht und Bremslicht links sowie Rückfahrscheinwerfer und die rechte Leuchtenanordnung LAR Blinker rechts, Rücklicht und Bremslicht rechts und Nebelschlussleuchte enthalten. In der mittleren Leuchtenanordnung LAM können wie zu Fig. 6 beschrieben, vorteilhafterweise Leuchtmittel zur Beleuchtung eines Kennzeichens KZ von oben und zusätzlich Leuchtmittel als mittlere Bremsleuchte und/oder zusätzliche mittlere Warnleuchte vorgesehen sein. Die einzelnen Leuchtenanordnungen sind jeweils von einem Profilende her über Anschlusskabel KA elektrisch angeschlossen. Die seitlichen Leuchtenanordnungen LAL sind im Bereich der seitlichen Enden eines fahrzeugseitigen Trägers, insbesondere einer Quertraverse QT angeordnet und auf diesem fahrzeugseitigen Träger einzeln befestigt. Unterhalb der seitlichen Leuchtenanordnungen LAL und LAR sind zusätzlich passive dreieckförmige Reflektoren RF angeordnet. Seitlich der Quertraverse ragen in an sich bekannter Weise Spurhalteleuchten SL in geringem Maß über die Fahrzeugbreite hinaus.

Die in Fig. 10 dargestellte Heckleuchtenanordnung HA unterscheidet sich von der Anordnung nach Fig. 9 im wesentlichen dadurch, dass ein über die gesamte Breite des Trägers QT durchgehendes Profil vorgesehen ist, in welchem die Leuchtmittel für alle Beleuchtungsfunktionen der Heckleuchtenanordnungen auf vorzugsweise mehreren Trägerplatinen nebeneinander angeordnet sind. Die Verteilung der einzelnen Beleuchtungsfunktionen über die Profillängsrichtung kann im wesentlichen der Verteilung der Heckleuchtenanordnung nach Fig. 9 entsprechen und die in Fig. 9 bestehenden Lücken zwischen den in y-Richtung aufeinander folgenden Leuchtenanordnung können durch optisch passive Überbrückungsmodule, welche auch bedruckt sein können, oder durch zusätzliche Beleuchtungsfunktion, wie beispielsweise eine separat schaltbare Arbeitsleuchte belegt sein. Die Fig. 10 kann die Beleuchtungsfunktionen der Anordnung nach Fig. 9 auch in anderer Verteilung enthalten, insbesondere kann der Rückfahrleuchte und/oder der Nebelschlussleuchte mehr Raum gewidmet sein. Die Heckleuchtenanordnung nach KAL ist vorteilhafterweise von beiden Seiten durch die Endverschlüsse hindurch elektrisch mit Anschlusskabeln KAL und KAR angeschlossen. Die Anschlusskabel KAL und KAR können in bevorzugter Ausführungsform jeweils in sich einen vollständigen Satz elektrisch gegeneinander isolierter Adern zur Versorgung und Ansteuerung aller Beleuchtungsfunktionen der Heckleuchtenanordnung enthalten. Die entsprechenden Adern der an entgegen gesetzten Enden angeschlossenen Kabel KAL und KAR können durch die Profilkammer mit den mehreren Trägerplatinen hindurch verbunden sein. In anderer Ausführungsform kann auch ein linksseitiger Teil der Leuchtmittel in der Profilkammer durch das linke Anschlusskabel KAL und der restliche Teil durch das rechte Anschlusskabel KAR angeschlossen und versorgt sein.

Die Heckleuchtenanordnung nach Fig. 11 sieht zwei beidseitig des Kennzeichens angeordnete Leuchtengehäuse vertikal hoher Bauweise nach Art der Fig. 2 vor, welche jeweils gemischt optisch aktive Bereiche und optisch passive Bereiche enthalten. Beispielsweise kann die linke Leuchtenanordnung LHL die Platinen und Leuchtmittel nach Fig. 7, den dort auch beschriebenen passiven Rückstrahler sowie zusätzlich Leuchtmittel für die Rückfahrscheinwerferfunktion sowie zum Kennzeichenfeld hin einen optisch passiven Informationsträger enthalten. Die rechte Leuchtenanordnung LHR weist auf Kabelanschlussseite die entsprechenden Beleuchtungsfunktionen Blinker, Bremslicht und Rücklicht auf und kann anstelle der Rückfahrscheinwerfer-Leuchtmittel der linken Leuchtenanordnung in dazu bezüglich der Fahrzeugmitte symmetrischer Position Leuchtmittel für die Nebelschlussleuchtenfunktion enthalten. Die mittlere Leuchtenanordnung entspricht nach enthaltenen Beleuchtungsfunktionen und Profilart der mittleren Leuchtenanordnung LAM nach Fig. 9.

In Fig. 12 ist ein Zweikammer-Profil nach Art der Fig. 3 vorgesehen, bei welchem die obere Kammer durchgehend über die gesamte Fahrzeugbreite ausgebildet ist und beispielsweise von der Ausstattung mit Trägerplatinen identisch ist mit dem Leuchtengehäuse nach Fig. 10. In die untere Kammer des Zweikammer-Profils ist im Bereich des Kennzeichens eine Aussparung geschnitten, in welche das Kennzeichen eingesetzt und durch die untere Kammerwand des oberen Profils hindurch beleuchtet ist. In den seitlich des Kennzeichenfelds liegenden, durch jeweils die untere Profilkammer gebildeten Gehäusen sind in diesem Beispiel nur optisch passive Träger, wie beispielsweise Informationsträger und Dreieckreflektoren untergebracht.

Bei der Leuchtenanordnung nach Fig. 13 sind zusätzlich zu der Leuchtenanordnung nach Fig. 12 oberhalb des Zweikammer-Profils an den seitlichen Fahrzeugrändern noch Reflektoren anderer Form, wie sie in manchen Ländern vorgeschrieben sind, angeordnet.

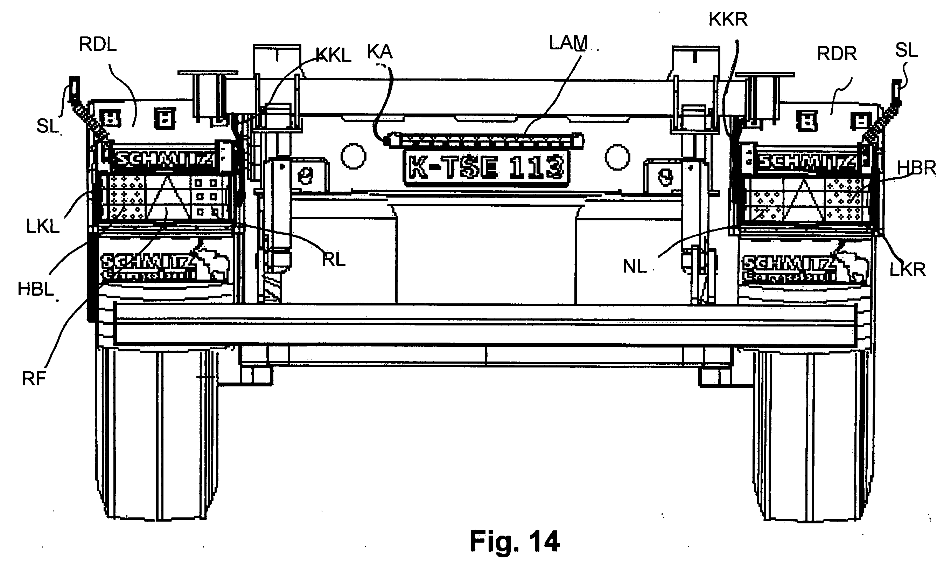

Fig. 14 zeigt eine vorteilhafte Heckleuchtenanordnung für einen Muldenkipper, bei welcher ähnlich der Fig. 11 bei dem Kennzeichen in der Fahrzeugmitte eine mittlere Leuchtenanordnung LAM mit zwei Beleuchtungsfunktionen als Kennzeichenbeleuchtung und mittige zusätzliche Warnleuchte angeordnet ist. In bei den Radabdeckungen RDL und RDR der hinteren Räder angeordneten Leuchtengehäusen LKL und LKR, welche vorteilhafterweise in der vertikal höheren Bauweise nach Art der Fig. 2 ausgeführt sind, sind beispielsweise im linken Leuchtengehäuse LKK eine erste Platine HBL mit Leuchtelementen zu den mehreren Funktionen linker Blinker, linkes Rücklicht und linkes Bremslicht, eine optisch passive Platine mit einem Reflektor RF sowie eine Platine RL mit leuchtstarken Leuchtelementen für die Rückfahrscheinwerferfunktion, im rechten Leuchtengehäuse LUR eine erste Trägerplatine HBR mit den zu HBL entsprechenden Beleuchtungsfunktionen rechts, eine passive Platine mit einem Reflektor und eine Platine NL mit Leuchtelementen für die Nebelschlussleuchtenfunktion vorgesehen. Anschlusskabel KKL und KKR sind vorzugsweise einseitig an den der Fahrzeugmitte zugewandten Enden der Leuchtengehäuse LKL, LKR angeschlossen. Die Leuchtengehäuse LKR, LKL nehmen horizontal quer zur Fahrtrichtung vorteilhafterweise zumindest annähernd dieselbe Ausdehnung ein wie die Radabdeckungen RDL, RDR. Spurhalteleuchten SL sind gleichfalls bei den Radabdeckungen angeordnet. Der über den Leuchtenanordnungen dargestellte Schriftzug kann bei Verwendung eines Zweikammer-profils nach Fig. 3 auch separat in der oberen Kammer eines solchen Profils angeordnet sein.

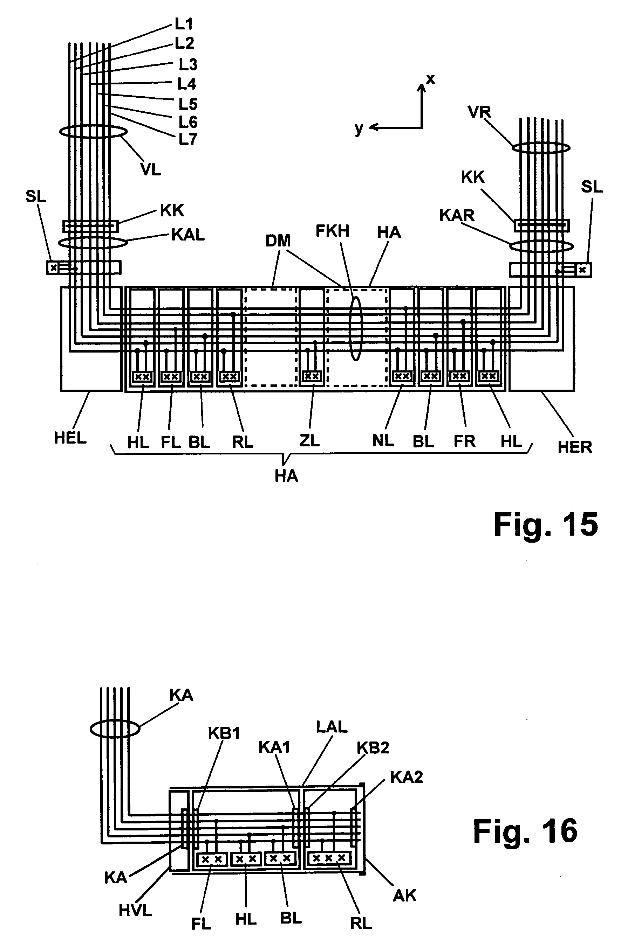

In Fig. 15 ist ein Leitungsschema einer vorteilhaften Ausführung einer im wesentlichen über die gesamte Fahrzeugbreite durchgehenden Beleuchtungsanordnung HA nach Art der Fig. 10 skizziert. Die Heckleuchtenanordnung HA kann in an sich bekannter Weise Rücklichter HL, rechte und linke Bremslichter BL, Rückfahrscheinwerfer RL, Nebelschlussleuchten NL, eine Kennzeichenbeleuchtung ZL und linke Blinkleuchten FL und rechte Blinkleuchten FR enthalten. Dabei sind typischerweise die Rücklichter HL und die Kennzeichenbeleuchtung ZL mit weiteren, nicht in der Heckleuchtenanordnung enthaltenen vorderen Umrissleuchten, Spurhalteleuchten SL und seitlichen Markierungsleuchten SM gemeinsam in Betrieb. Gemäß einer bevorzugten Ausführung sind alle Leuchten durch Leuchtdiodengruppen gebildet. Die Heckleuchtenanordnung weist an beiden entgegengesetzten Enden HEL, HER des Profilgehäuses je einen Kabelabschnitt KAL bzw. KAR als Anschlusskabel mit jeweils sieben Adern L1 bis L7 auf, welche z. B. den Funktionen
- L1: Masse
- L2: Rücklichter und Kennzeichenbeleuchtung
- L3: Bremsleuchten
- L4: Blinker links
- L5: Blinker rechts
- L6: Rückfahrscheinwerfer
- L7: Nebelschlussleuchte
zugeordnet sind

Die mit gleichen Funktionen belegten Adern der beiden Anschlusskabel sind durch die Heckleuchtenanordnung HA hindurch elektrisch unter Bildung geschlossener Leiterschleifen verbunden. Solche elektrische Verbindungen können in einer ersten Ausführungsform durch eine im wesentlichen über die gesamte Länge der Heckleuchtenanordnung in y-Richtung durchgehende mehradrige Leiteranordnung, insbesondere ein Flachkabel FKH, gebildet sein, wobei die einzelnen Beleuchtungsmodule der Beleuchtungsanordnung mit den jeweils zugeordneten Leitern der Leiteranordnung kontaktiert sind, vorzugsweise ohne Unterbrechung der Leiter, beispielsweise wiederum über Kontaktschneiden oder Kontaktspitzen, die eine Isolierung der Leiteranordnung durchdringen. Das Flachkabel kann auch als Folienkabel ausgeführt sein. Das Flachkabel kann in einer in Profillängsrichtung y durchgehenden im wesentlichen formstabilen Schiene geführt oder gehalten sein. Eine solche Schiene kann zugleich auch als mechanischer Träger für die mehreren Trägermodule dienen. In anderer vorteilhafter Ausführung kann die mehradrige Leiteranordnung auch durch einen im wesentlichen fromstabilen Trägerstreifen oder ein Trägerprofil mit mehreren getrennten Leiterstrukturen in Profillängsrichtung y ausgeführt sein, an dessen Leiterstrukturen die einzelnen Beleuchtungsmodule durch Steckkontakte, Clipkontakte, Federkontakte etc. anschließbar sind.

In anderer Ausführung kann die Leiteranordnung durch mehrere in y-Richtung aneinandergereihte Module gebildet sein, welche jeweils an den einander zugewandten Kanten benachbarter Module korrespondierende Kontaktanordnungen zu den mehreren Adern der Leiteranordnung aufweisen und mehrere Leiterbahnen über den Verlauf der Module zwischen Kontaktanordnungen desselben Moduls an gegenüberliegenden Kanten durchführen. Die Module können vorteilhafterweise zumindest teilweise durch verschiedenen Beleuchtungsfunktionen dienende Module selbst und/oder, insbesondere in Lücken zwischen benachbarten Modulen durch Überbrückungsmodule ohne Beleuchtungsfunktion gebildet sein. In wieder anderer Ausführung können die getrennten Module auf einem gemeinsamen Träger mechanisch verbunden und über mehradrige elektrische Verbindungen kontaktiert sein. Ein solcher gemeinsamer mechanischer Träger kann in vorteilhafter Ausführung aus gut wärmeleitendem Material bestehen und in gutem Wärmekontakt zumindest zu den Beleuchtungselementen mit der größten Verlustleistung, z. B. leuchtstarke Dioden für die Rückfahrscheinwerfer, stehen. Ein mehrere Trägermodule verbindender Träger kann auch selbst in den Führungsnuten des Profils des Leuchtengehäuses längsverschiebbar gehalten sein und die einzelnen Module können dann ohne eigenen Eingriff in die Führungsnuten fest, vorzugsweise zerstörungsfrei lösbar, auf dem gemeinsamen mechanischen Träger befestigt sein. Die mehradrigen Verbindungen zwischen benachbarten Modulen sind vorteilhafterweise durch Flachkabel und durch Kontaktanordnungen mit Spitzen- oder Schneidenkontaktierung der Kabeladern unter Durchdringung der Adernisolierung ausgeführt.

In Fig. 15 ist für die Leiteranordnung in der Heckleuchtenanordnung die Variante mit einem in Längsrichtung y der Heckleuchtenanordnung durchgehenden mehradrigen Leiteranordnung, z. B. einem Flachkabel FKH skizziert, welches in Form von Anschlusskabeln KAL, KAR über die entgegen gesetzten Enden HEL, HER der langgestreckten Heckleuchtenanordnung HA hinaus verlängert und parallel zu den Längsseiten umgelenkt sein kann oder mit solchen Anschlusskabeln elektrisch verbunden ist. Die über die Enden HEL, HER hinausragenden Kabelabschnitte KAL, KAR sind mit weiterführenden Verbindungsleitungen VL, VR über Kupplungen KK elektrisch kontaktierbar oder können selbst solche weiterführenden Verbindungsleitungen bilden. Innerhalb der Heckleuchtenanordnung HA sind die verschiedenen Beleuchtungsmodule mit den jeweils ihrer Funktion zugeordneten Adern des Kabels FKH kontaktiert. Das Kabel FKH kann zugleich teilweise als mechanische Verbindung der einzelnen Module dienen, beispielsweise in einem Modulverbund vor Befestigung auf einem mechanischen Zwischenträger oder vor Einführung in das Profilgehäuse. Das Kabel FKH kann vom gleichen Kabeltyp, insbesondere auch mit identischem Querschnitt wie die Anschlusskabel KAL, KAR oder von diesem verschieden sein. Zwischen beabstandeten Beleuchtungsmodulen können Distanzmodule DM ohne Beleuchtungsfunktion vorliegen.

In Fig. 16 ist die Leitungsführung in einer einseitigen Heckleuchtenanordnung, z.B. LAL nach Fig.9 in der Variante skizziert, welche nur von einem Gehäuseende her durch ein Anschlusskabel KA gespeist und am anderen Ende durch eine Abschlusskappe AK ohne elektrische Durchführungen verschlossen ist. Für die Fortführung von elektrischen Verbindungen in y-Richtung in einer Leiteranordnung der Heckleuchtenanordnung ist die Variante dargestellt, bei welcher korrespondierende Kontaktanordnungen KAi, KBi an in Längsrichtung y der Heckleuchtenanordnung entgegen gesetzten Kanten der einzelnen Beleuchtungsmodule vorliegen. Jedes Modul, auch ggf. zur Abstandsüberbrükkung eingesetzte Überbrückungsmodule, weist an wenigstens einer, vorzugsweise beiden in y-Richtung entgegen gesetzten Kanten eine erste Kontaktanordnung KAi bzw. eine zweite zu der ersten vom Typ komplementäre Kontaktanordnung KBi auf, welche mit den Kontaktanordnungen benachbarter Module elektrische Verbindungen eingehen. Eine mechanische Verbindung benachbarter Module kann zusätzlich vorgesehen oder baulich mit den Kontaktanordnungen vereint sein. Eine randständiges Trägermodul KL, welches im skizzierten Beispiel entsprechend Fig. 8 z. B. auf einer Trägerplatine vereint die Beleuchtungsfunktionen Rücklicht RL, Bremslicht BL und Blinker links FL aufweist, ist mit den Adern des durch den Endverschluss HVL geführten Anschlusskabels KA verlötet oder über eine weitere Kontaktanordnung KAA elektrisch verbunden.

Das der Kontaktanordnung KAA unmittelbar benachbarte Beleuchtungsmodul KL weist eine dem linken Endverschluss mit einer Verbindungsanordnung HVL zugewandte Kontaktanordnung KB1 auf, welche zu jedem Kontakt der Kontaktanordnung KAA einen Gegenkontakt besitzt, wenngleich für die diesem Beleuchtungsmodul zugewiesene Beleuchtungsfunktion nur ein Teil dieser Kontakte benötigt wird. Das Beleuchtungsmodul KL weist ferner an seiner der Verbindungsanordnung HVL abgewandten und dem in Längsrichtung y folgenden Beleuchtungsmodul RL zugewandten Kante eine Kontaktanordnung KA1 auf, welche mit der Kontaktanordnung KB2 des folgenden Beleuchtungsmoduls RL kontaktiert ist und über welche das folgende Beleuchtungsmodul und gegebenenfalls in Längsrichtung weiter von der Verbindungsanordnung entfernte Beleuchtungsmodule der Heckleuchtenanordnung LAL gespeist sind. Hierzu weist die Kontaktanordnung KA1 wenigstens für die Adern, welche zur elektrischen Ansteuerung bzw. Speisung der nachfolgenden Module dienen, je einen Kontakt und die Kontaktanordnung KB2 des folgenden Beleuchtungsmoduls die entsprechenden Gegenkontakte auf. Die Kontakte der Kontaktanordnung KA1 sind mit den entsprechenden Kontakten der Kontaktanordnung KB1 desselben Beleuchtungsmoduls auf diesem verbunden. Die Weiterführung der elektrischen Verbindungen zu ggf. nachfolgenden Beleuchtungsmodulen kann über die Kontaktanordnung KB2 des Moduls RL entsprechend gestaltet sein, wobei die Anzahl der Kontakte der Kontaktanordnungen sukzessive abnehmen und am letzten Beleuchtungsmodul einer Versorgungskette auch nur an einer Kante eine Kontaktanordnung vorgesehen sein kann.

Vorteilhafterweise ist jedoch an einigen, vorzugsweise an allen Beleuchtungsmodulen die Anzahl der Kontakte an den in Längsrichtung entgegengesetzten Kanten angeordneten Kontaktanordnungen gleich groß. Vorzugsweise sind dabei jeweils die Kontakte der an entgegen gesetzten Kanten desselben Moduls vorgesehenen Kontaktanordnungen KAi, KBi paarweise elektrisch miteinander verbunden. Dadurch können z. B. die Module mit unterschiedlichen Beleuchtungsfunktionen in veränderbarer Reihenfolge gruppiert werden und/oder für gleiche Beleuchtungsfunktionen links und rechts identische Module verwendet werden.

Die Anzahl der Adern des Anschlusskabels kann bei der Anordnung nach Fig. 16 gegenüber Fig. 15 auf beispielsweise fünf Adern reduziert sein, wobei z. B. im Anschlusskabel KA neben der Masseader einzelne Adern für Rücklicht links, Blinker links, Bremsleuchte links und Rückfahrscheinwerfer vorgesehen sind. Eine reduzierte Anzahl von Kabeladern der Anschlusskabel kann auch in einem von beiden Seiten über Anschlusskabel gespeisten Profilgehäuse nach Fig. 10 vorgesehen sein, wobei dann eine interne Durchverbindung nicht oder nur für Adern mit identischer Funktionsbelegung vorgesehen ist.

Vorteilhafterweise können aber auch bei Varianten mit nicht in der Heckleuchtenanordnung durch verbundenen Adern oder nur einseitiger Speisung einer reduzierten Anzahl von Beleuchtungsmodulen Anschlusskabel mit einer Anzahl von Adern vorgesehen sein, welche der Variante nach Fig. 15 mit z. B. sieben Adern für alle Beleuchtungsfunktionen entspricht, wobei dann einzelne Adern in den Anschlusskabeln keine Funktion ausüben, z. B. eine Ader für Blinker rechts im Anschlusskabel für eine linksseitige Beleuchtungsanordnung LAL. Trotz der nicht belegten Kabeladern können sich wesentliche Vorteile durch mit anderen Varianten einheitlichen Kabeltypen und Kontaktanordnungen ergeben.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Heckleuchtenanordnung für Lastfahrzeuge, insbesondere Anhänger, mit wenigstens einem an dem Fahrzeug befestigten Leuchtengehäuse und wenigstens einer in dem Gehäuse angeordneten Lichtquellenanordnung, **dadurch gekennzeichnet, dass** das Gehäuse durch ein langgestrecktes lineares Kunststoffprofil gebildet ist, welches eine horizontal und quer zur Fahrtrichtung ausgerichtete Längsachse aufweist und im Querschnitt eine geschlossene Kammer bildet, dass die an in Längsrichtung entgegen gesetzten Enden des Profils befindlichen Öffnungen der Kammer durch Endverschlüsse wasserdicht verschlossen sind, dass das Profil zumindest an der in Fahrtrichtung nach hinten weisenden Kammerwand transparent ist, und dass die Lichtquellenanordnung wenigstens ein Trägermodul mit wenigstens einer Lichtquelle aufweist, welches in der Kammer gehalten ist.

2. Anordnung nach Anspruch 1, **dadurch gekennzeichnet, dass** das wenigstens eine Trägermodul in der Kammer längsverschiebbar gehalten und durch wenigstens eine der Öffnungen in Längsrichtung aus dieser entnehmbar ist.

3. Anordnung nach Anspruch 1 oder 2, **dadurch gekennzeichnet, dass** in dem Kunststoffprofil Längsführungen für das Trägermodul ausgebildet sind.

4. Anordnung nach einem der Ansprüche 1 bis 3, **dadurch gekennzeichnet, dass** das Trägermodul eine Schaltungsplatine mit mehreren Lichtquellen umfasst.

5. Anordnung nach einem der Ansprüche 1 bis 4, **gekennzeichnet durch** wenigstens ein lichtemittierendes Halbleiterbauelement als Lichtquelle.

6. Anordnung nach einem der Ansprüche 1 bis 6, **dadurch gekennzeichnet, dass** elektrische Zuleitungen zu der Lichtquellenanordnung durch wenigstens einen der Endverschlüsse geführt sind.

7. Anordnung nach Anspruch 6, **dadurch gekennzeichnet, dass** elektrische Zuleitungen als Kabel in einen Endverschluss eingegossen sind.

8. Anordnung nach Anspruch 6, **dadurch gekennzeichnet, dass** elektrische Zuleitungen als durchgeführte Kontakte in einem Verschlusskörper ausgebildet sind.

9. Anordnung nach einem der Ansprüche 1 bis 8, **dadurch gekennzeichnet, dass** das Trägermodul wenigstens eine Gruppe von Schneidkontakten zum Anschluss an ein mehradriges Kabel unter Durchdringung der Kabelisolierung aufweist.

10. Anordnung nach einem der Ansprüche 1 bis 8, **dadurch gekennzeichnet, dass** das Trägermodul wenigstens eine Gruppe von Steckkontakten als einen Teil einer Steckkupplung aufweist.

11. Anordnung nach Anspruch 10, **dadurch gekennzeichnet, dass** die Gruppe von Steckkontakte in Längsrichtung des Profils endständig an dem Trägermodul angeordnet ist.

12. Anordnung nach einem der Ansprüche 1 bis 11, **dadurch gekennzeichnet, dass** die Lichtquellenanordnung mehrere in Längsrichtung des Profils aufeinanderfolgend angeordnete Trägermodule enthält.

13. Anordnung nach Anspruch 12, **dadurch gekennzeichnet, dass** mehrere Trägermodule elektrisch mit einer gemeinsamen, sich in Längsrichtung erstrekkenden mehradrigen Leiteranordnung kontaktiert sind.

14. Anordnung nach Anspruch 12, **dadurch gekennzeichnet, dass** die Leiteranordnung ein mehradriges Kabel enthält oder einen starren Träger mit mehreren getrennten Leiterstrukturen in y-Richtung enthält.

15. Anordnung nach Anspruch 12, **dadurch gekennzeichnet, dass** benachbarte Trägermodule über einander zu weisende komplementäre Steckkontaktgruppen elektrisch miteinander verbunden sind.

16. Anordnung nach Anspruch 15, **dadurch gekennzeichnet, dass** ein Trägermodul an in Längsrichtung entgegengesetzt gegenüber liegenden Seiten je eine Gruppe von Steckkontakten aufweist.

17. Anordnung nach Anspruch 16, **dadurch gekennzeichnet, dass** die beiden Gruppen von Steckkontakten eines Trägermoduls Kontakte aufweisen, welche nicht dem Betrieb von Lichtquellen dieses Trägermoduls dienen und paarweise elektrisch verbunden sind.

18. Anordnung nach einem der Ansprüche 15 bis 17, **dadurch gekennzeichnet, dass** ein Überbrückungsmodul ohne Lichtquellen in Längsrichtung zwischen zwei Trägermodulen angeordnet ist und das Überbrückungsmodul an in Längsrichtung entgegen gesetzten Enden je eine Gruppe von Steckkontakten aufweist, deren Kontakte paarweise elektrisch verbunden sind.

19. Anordnung nach einem der Ansprüche 1 bis 18, **dadurch gekennzeichnet, dass** Trägermodule unterschiedlicher Beleuchtungsfunktionen in einem Gehäuse vereint sind.

20. Anordnung nach einem der Ansprüche 1 bis 19, **dadurch gekennzeichnet, dass** ein Trägermodul mit überwiegend quer zur Fahrtrichtung strahlender Lichtquelle als Kennzeichenbeleuchtung vorgesehen ist.

21. Anordnung nach einem der Ansprüche 1 bis 20, **dadurch gekennzeichnet, dass** ein passives Reflektormodul in dem Gehäuse angeordnet ist.

22. Anordnung nach einem der Ansprüche 1 bis 21, **dadurch gekennzeichnet, dass** das Profil im Querschnitt nach außen weisend hinterschnittene Befestigungsstrukturen aufweist und über diese am Heck des Fahrzeugs befestigt ist.

23. Anordnung nach einem der Ansprüche 1 bis 22, **dadurch gekennzeichnet, dass** das Kunststoffprofil materialhomogen transparent ist.

24. Anordnung nach einem der Ansprüche 1 bis 23, **dadurch gekennzeichnet, dass** das Gehäuse über wenigstens 80 %, vorzugsweise wenigstens 90 % der Fahrzeugbreite einstückig durchgehend ausgebildet ist.

25. Anordnung nach einem der Ansprüche 1 bis 24, **dadurch gekennzeichnet, dass** wenigstens zwei durch Kunststoffprofile gebildete getrennte Gehäuse vorhanden sind.

26. Anordnung nach Anspruch 25, **dadurch gekennzeichnet, dass** wenigstens zwei Gehäuse gleiche Profilquerschnitte aufweisen und im wesentlichen symmetrisch bezüglich der Fahrzeugmitte angeordnet sind.

27. Anordnung nach Anspruch 26, **dadurch gekennzeichnet, dass** die Gehäuse seitlich im Bereich der hinteren Radabdeckungen angeordnet sind.

28. Anordnung nach Anspruch 27, **dadurch gekennzeichnet, dass** wenigstens zwei getrennte Gehäuse unterschiedliche Profilquerschnitte aufweisen.

29. Anordnung nach Anspruch 28, **dadurch gekennzeichnet, dass** zwei getrennte Gehäuse vertikal übereinander angeordnet sind.

30. Anordnung nach Anspruch 29, **dadurch gekennzeichnet, dass** die beiden Gehäuse lösbar miteinander verbunden sind.

31. Anordnung nach einem der Ansprüche 1 bis 28, **dadurch gekennzeichnet, dass** das Profil zwei vertikal übereinander liegende separate Klammern enthält.

32. Anordnung nach einem der Ansprüche 1 bis 31, **dadurch gekennzeichnet, dass** das Kennzeichenfeld des Fahrzeugs vertikal gegen das Gehäuse versetzt angeordnet ist und ein in dem Gehäuse befindliches Trägermodul mit einer Kennzeichenbeleuchtung wenigstens eine im wesentlichen vertikal durch das Gehäuse strahlende Lichtquelle aufweist.

33. Anordnung nach einem der Ansprüche 1 bis 32, **dadurch gekennzeichnet, dass** das Fahrzeugkennzeichen innerhalb eines Gehäuses mit einem Trägermodul mit Kennzeichenbeleuchtung angeordnet ist.

34. Anordnung nach einem der Ansprüche 1 bis 33, **dadurch gekennzeichnet, dass** ein Endverschluss einen gegen die Kammerwand verspannbaren elastischen Dichtungsformkörper beinhaltet.

35. Anordnung nach Anspruch 34, **dadurch gekennzeichnet, dass** der Formkörper durch konische Anlageflächen eines in Längsrichtung verschiebbaren Druckkörpers gegen die Kammerwand verspannbar ist.

36. Anordnung nach einem der Ansprüche 1 bis 35, **dadurch gekennzeichnet, dass** ein Endverschluss einen in den Kammerquerschnitt eingeklebten Verschlusskörper enthält.

37. Anordnung nach einem der Ansprüche 1 bis 36, **dadurch gekennzeichnet, dass** ein Endverschluss durch Vergießen einer Öffnung des Gehäuses mit einer sich verfestigenden plastischen Masse gebildet ist.
